(19) Europäisches Patentamt / European Patent Office / Office européen des brevets

(11) EP 3 754 266 A1

(12) EUROPEAN PATENT APPLICATION
published in accordance with Art. 153(4) EPC

(43) Date of publication:
23.12.2020 Bulletin 2020/52

(51) Int Cl.:
F24H 1/18 (2006.01)

(21) Application number: 18906066.8

(22) Date of filing: 13.02.2018

(86) International application number:
PCT/JP2018/004830

(87) International publication number:
WO 2019/159217 (22.08.2019 Gazette 2019/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Mitsubishi Electric Corporation
Tokyo 100-8310 (JP)

(72) Inventors:
• TOGAWA, Kazuki
  Tokyo 100-8310 (JP)
• MATSUZAWA, Koji
  Tokyo 100-8310 (JP)

(74) Representative: Pfenning, Meinig & Partner mbB
Patent- und Rechtsanwälte
Theresienhöhe 11a
80339 München (DE)

(54) **REMOTE CONTROLLER AND AIR CONDITIONING HOT WATER SUPPLY SYSTEM**

(57)    A remote control and an air-conditioning hot-water supply system, in which the remote control to control a heat-medium circuit includes: a data collection unit configured to collect state data indicating an operating state of the heat-medium circuit; and a data display unit configured to display a data value of state data collected by the data collection unit in time sequence.

FIG. 5

**Description**

Technical Field

The present disclosure relates to a remote control that controls a heat-medium circuit, and an air-conditioning hot-water supply system.

Background Art

Some related-art remote controls are configured to control a heat-medium circuit in an air-conditioning hot-water supply system or other systems. The air-conditioning hot-water supply system includes a heat source apparatus, and circulates a heat medium heated by the heat source apparatus through an air-conditioning circuit and a hot-water supply circuit to heat the room and supply hot water. In Europe, an air-conditioning hot-water supply system, combining heating and hot water supply, is generally used. This system uses a radiant heating method in which a heat medium passes through a radiator, and also uses an indirect water heating method in which heat is exchanged between the heat medium and water to generate hot water. At the time of installing an air-conditioning hot-water supply system, a test run of the air-conditioning hot-water supply system is conducted by a worker using a remote control to check the operation of an air-conditioning circuit and a hot-water supply circuit.

There has been a commonly-known hot-water supply device including a circulation path connecting a tank and a heat source apparatus, and a water circulation pump to circulate water from the tank through the circulation path. In the hot-water supply device, necessary information for checking of the operation is displayed on a remote control during the test run (for example, see Patent Literature 1). The remote control displays the necessary information on the temperature of water that flows from the tank into the circulation path, the temperature of water that returns from the circulation path to the tank, a pump command value for the water circulation pump, and a calculated boiling capacity. Whether the value of each piece of necessary information falls within a set range is determined and the determination result is displayed.

Citation List

Patent Literature

Patent Literature 1: Japanese Patent No. 3876697

Summary of Invention

Technical Problem

However, in the hot-water supply device disclosed in Patent Literature 1, an instantaneous value of necessary information at a certain time is displayed. For this reason, when an operational abnormality has occurred due to improper installation, problems with components, and other factors, it is difficult for a worker to estimate the circumstances of the abnormality occurrence even though the worker sees the instantaneous value. This makes it difficult for the worker to identify the cause.

The present disclosure has been achieved to solve the above problems, and an object of the present disclosure is to provide a remote control that facilitates identifying the cause of an abnormality, and an air-conditioning hot-water supply system.

Solution to Problem

In a remote control and an air-conditioning hot-water supply system according to one embodiment of the present disclosure, the remote control to control a heat-medium circuit includes: a data collection unit configured to collect state data indicating an operating state of the heat-medium circuit; and a data display unit configured to display a data value of state data collected by the data collection unit in time sequence.

Advantageous Effects of Invention

The remote control and the air-conditioning hot-water supply system according to one embodiment of the present disclosure display each state data in time-series on the remote control, so that a worker can understand a change in state data over time. Therefore, the worker can easily identify the cause of an abnormality.

Brief Description of Drawings

[Fig. 1] Fig. 1 is a schematic diagram illustrating a circuit of an air-conditioning hot-water supply system according to a first embodiment of the present disclosure.

[Fig. 2] Fig. 2 is a schematic diagram illustrating a configuration of the air-conditioning hot-water supply system according to the first embodiment of the present disclosure.

[Fig. 3] Fig. 3 is a block diagram illustrating a functional configuration of a remote control according to the first embodiment of the present disclosure.

[Fig. 4] Fig. 4 illustrates a data structure of the remote control according to the first embodiment of the present disclosure.

[Fig. 5] Fig. 5 is an explanatory diagram illustrating an example of state data displayed on the remote control of the air-conditioning hot-water supply system according to the first embodiment of the present disclosure.

[Fig. 6] Fig. 6 is an explanatory diagram illustrating an example of cause information displayed on the remote control of the air-conditioning hot-water supply system according to the first embodiment of the present disclosure.

[Fig. 7] Fig. 7 is a flowchart illustrating an example of control to be executed by the remote control according to the first embodiment of the present disclosure. Description of Embodiment

Embodiment 1

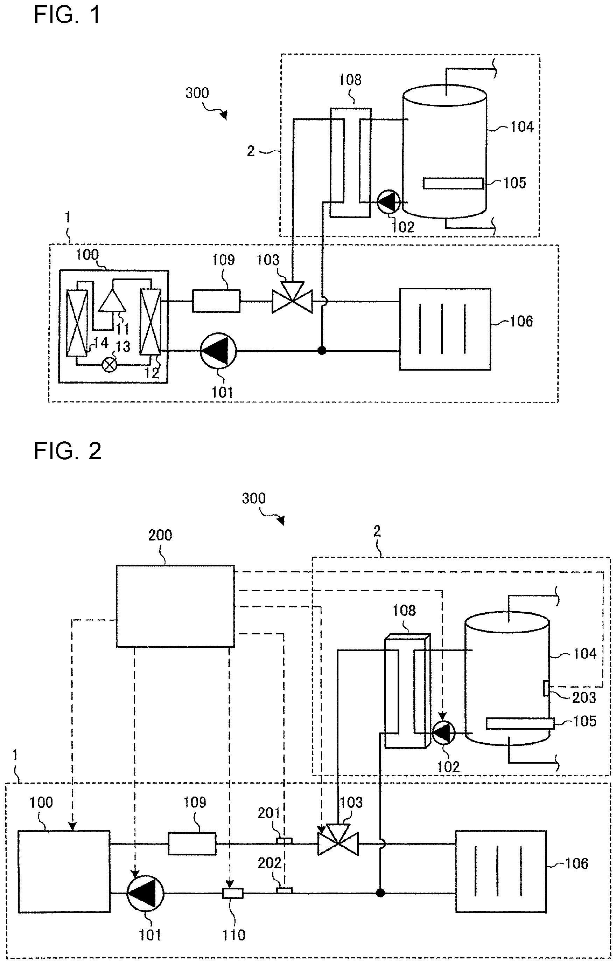

Fig. 1 is a schematic diagram illustrating a circuit of an air-conditioning hot-water supply system according to a first embodiment of the present disclosure. An air-conditioning hot-water supply system 300 includes an air-conditioning circuit 1 configured to perform air conditioning in a target space, and a hot-water supply circuit 2 configured to generate hot water to be used for shower and other purposes. The air-conditioning circuit 1 and the hot-water supply circuit 2 serve as a heat-medium circuit. The air-conditioning circuit 1 includes a heat source apparatus 100, a booster heater 109, a switching valve 103, a radiator 106, and a first circulation pump 101. The hot-water supply circuit 2 includes a tank heat exchanger 108, a tank 104, a water immersion heater 105, and a second circulation pump 102. The radiator 106 and the tank heat exchanger 108 are connected in parallel to the heat source apparatus 100. A heat medium that flows out of the heat source apparatus 100 flows through the radiator 106 and the tank heat exchanger 108. For example, water, brine, or the like is used as a heat medium.

The heat source apparatus 100 has a refrigerant circuit in which a compressor 11, a refrigerant-to-heat medium heat exchanger 12, a decompression device 13, and a refrigerant-to-air heat exchanger 14 are connected by a refrigerant pipe. The compressor 11 suctions and compresses low-temperature low-pressure refrigerant to be brought into a high-temperature high-pressure state, and then discharges the refrigerant. The compressor 11 is, for example, an inverter compressor with a controllable capacitance.

The refrigerant-to-heat medium heat exchanger 12 is connected to the discharge side of the compressor 11. The refrigerant-to-heat medium heat exchanger 12 exchanges heat between refrigerant and a heat medium, and functions as a condenser. The decompression device 13 is provided between the refrigerant-to-heat medium heat exchanger 12 and the refrigerant-to-air heat exchanger 14. The decompression device 13 is, for example, an electronic expansion valve or other elements, and decompresses and expands refrigerant. The refrigerant-to-air heat exchanger 14 is connected to the suction side of the compressor 11. The refrigerant-to-air heat exchanger 14 exchanges heat between outside air and refrigerant, and functions as an evaporator.

In the heat source apparatus 100, high-temperature refrigerant is generated by a refrigeration cycle of outside air and refrigerant, and a heat medium is heated by the high-temperature refrigerant. Note that a four-way valve or other valve that switches the refrigerant flow path may be provided on the discharge side of the compressor 11 to switch between heating operation and cooling operation. In this case, in the heat source apparatus 100 during the cooling, the refrigerant-to-air heat exchanger 14 functions as a condenser, while the refrigerant-to-heat medium heat exchanger 12 functions as an evaporator, whereby the heat medium is cooled.

The first circulation pump 101 pressurizes and circulates a heat medium. The first circulation pump 101 circulates a heat medium between the refrigerant-to-heat medium heat exchanger 12 and the tank heat exchanger 108, or between the refrigerant-to-heat medium heat exchanger 12 and the radiator 106.

For example, the radiator 106 is a load device located in the room to perform air conditioning in the room. The radiator 106 exchanges heat between a heat medium supplied from the heat source apparatus 100 through the pipe and air in a target space. During the heating by air-conditioning operation, a heat medium having been heated flows into the radiator 106, and then heat is released from the heat medium to air in the room, whereby the room is heated.

The switching valve 103 is, for example, a three-way valve or other valve, and is intended to switch the heat-medium flow path. To be more specific, the switching valve 103 switches the destination of the heat medium that flows out of the heat source apparatus 100 between a flow path passing through the radiator 106 and a flow path passing through the tank heat exchanger 108.

The booster heater 109 is provided between the heat source apparatus 100 and the switching valve 103. The booster heater 109 is energized and thereby generates heat to further heat the heat medium that flows out of the heat source apparatus 100. For example, the booster heater 109 is energized when the heating capacity of the heat source apparatus 100 is insufficient for a load needed for the load device. The booster heater 109 is also used as a backup in a case where a heat pump is faulty.

The tank 104 stores water therein. The tank 104 connects with a feed water pipe leading to a water pipe, and also connects with a hot-water discharge pipe connected to a hot-water supply load such as a shower. The feed water pipe is connected to the bottom part of the tank 104 such that tap water is supplied into the tank 104 through the feed water pipe. The hot-water discharge pipe is connected to the top part of the tank 104 such that hot water is discharged through the hot-water discharge pipe. Water supplied from the feed water pipe makes up for the amount of water having flowed out of the hot-water discharge pipe. Thus, the tank 104 is normally filled with water.

The second circulation pump 102 is a pump that pressurizes and circulates water. The second circulation pump 102 circulates water stored in the tank 104 between the tank 104 and the tank heat exchanger 108. Preferably, the second circulation pump 102 is a pump with a variable water flow rate.

The tank heat exchanger 108 is a load device to exchange heat between a heat medium supplied from the heat source apparatus 100 and water supplied from the tank 104 by the second circulation pump 102. During hot-water supply operation, a heat medium having been heated flows into the tank heat exchanger 108, so that water is heated by the heat medium. The tank 104 has the water immersion heater 105 incorporated therein. Hot water stored in the tank 104 is heated also by the water immersion heater 105.

During the heating by air-conditioning operation, the heat source apparatus 100 and the radiator 106 are connected by the switching valve 103, and thus the first circulation pump 101 circulates the heat medium through the air-conditioning circuit 1. At this time, the heat medium heated by the heat source apparatus 100 releases heat when passing through the radiator 106, whereby the target space is heated. In contrast, during hot-water supply operation, the heat source apparatus 100 and the tank heat exchanger 108 in the hot-water supply circuit 2 are connected by the switching valve 103, and thus the first circulation pump 101 circulates the heat medium between the heat source apparatus 100 and the tank heat exchanger 108. At this time, in the tank heat exchanger 108, water in the tank 104 circulated by the second circulation pump 102 is heated by the heat medium, whereby hot water is generated. The generated hot water is stored in the tank 104, and is supplied to the hot-water supply load through the hot-water discharge pipe. In the manner as described above, a high-temperature heat medium that flows out of the heat source apparatus 100 is delivered to the load device, and used for heating or hot water supply in the load device. Then, the heat medium becomes lower in temperature, returns to the heat source apparatus 100, and is heated.

Fig. 2 is a schematic diagram illustrating a configuration of the air-conditioning hot-water supply system 300 according to the first embodiment of the present disclosure. As illustrated in Fig. 2, the air-conditioning hot-water supply system 300 includes a flow sensor 110, a plurality of temperature sensors, and a remote control 200. The flow sensor 110 measures a flow rate L of a heat medium delivered by the first circulation pump 101 per unit time.

Each of the temperature sensors is made up of, for example, a thermistor and other elements. A pipe between the booster heater 109 and the switching valve 103 is provided with a first temperature sensor 201. The first temperature sensor 201 measures an supply temperature T1 of a heat medium that flows toward the load device. A pipe between the load device and the refrigerant-to-heat medium heat exchanger 12 in the heat source apparatus 100 is provided with a second temperature sensor 202. The second temperature sensor 202 measures a return-flow temperature T2 of a heat medium that releases heat in the load device and returns to the heat source apparatus 100. In the tank 104, a third temperature sensor 203 is located to measure a water temperature T3 in the tank 104.

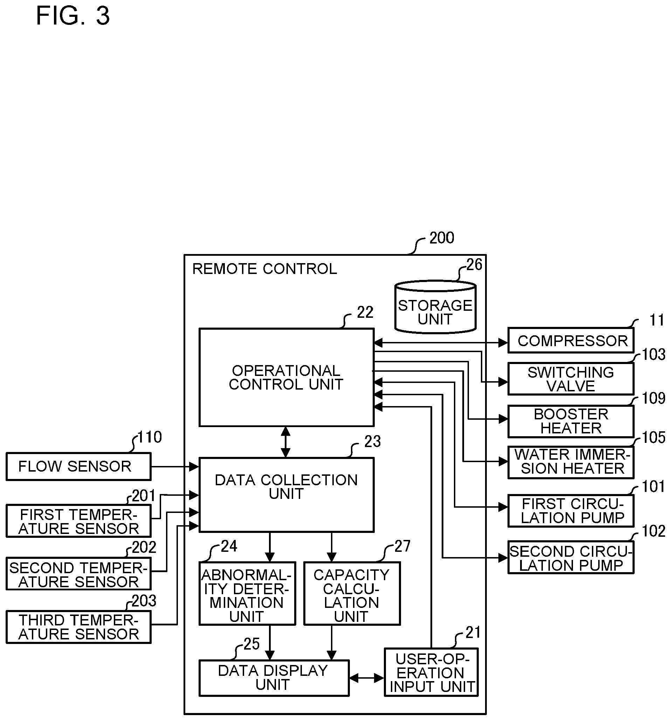

The remote control 200 is made up of, for example, a microcomputer, a touch panel, and other elements. The remote control 200 is connected to the various types of sensors, the devices in the air-conditioning circuit 1, and the devices in the hot-water supply circuit 2, which are described above, such that the remote control 200 is capable of communicating with these sensors and devices. An operational command is input to the remote control 200 through the touch panel. When the operational command is input to the remote control 200, the remote control 200 controls the heat-medium circuit according to a load of each load device. The remote control 200 includes a data display unit 25 (see Fig. 3) configured to display various types of information.

Fig. 3 is a block diagram illustrating a functional configuration of the remote control according to the first embodiment of the present disclosure. The remote control 200 includes a user-operation input unit 21, an operational control unit 22, a data collection unit 23, an abnormality determination unit 24, the data display unit 25, a storage unit 26, and a capacity calculation unit 27. The user-operation input unit 21 is configured to receive an operation of a user. Operational commands, such as an operational mode, a set temperature, and an air volume, are input to the operational control unit 22 through the user-operation input unit 21.

The operational control unit 22 controls air-conditioning operation and hot-water supply operation based on the operational commands input through the user-operation input unit 21, and based on various types of measurement data input through the data collection unit 23. Specifically, the operational control unit 22 controls the rotational speed of the compressor 11, switching of the switching valve 103, energization of the booster heater 109, energization of the water immersion heater 105, the flow rate of the first circulation pump 101, and the flow rate of the second circulation pump 102 according to the operational commands and the load of the load device.

The operational control unit 22 obtains output data on the rotational speed of the compressor 11, the flow rate of the first circulation pump 101, and the flow rate of the second circulation pump 102. For example, a rotational speed of the compressor 11 may be detected by a rotational speed sensor, or a refrigerant discharge pressure may be detected by a pressure sensor and converted to an output of the compressor 11. For example, a pressure of a heat medium to be delivered may be detected by a pressure sensor and converted to an output of each of the first circulation pump 101 and the second circulation pump 102, or a rotational speed of a motor that drives each pump may be converted to an output of each pump.

When a command to start air-conditioning operation is input, the operational control unit 22 drives the compressor 11 and the first circulation pump 101, and controls switching of the switching valve 103 such that the heat source apparatus 100 and the radiator 106 are connected. At this time, a heat medium heated by the heat source apparatus 100 flows into the radiator 106, and then heat is released from the heat medium in the radiator 106 to air in the room, so that the room is heated. The cooled heat medium returns to the heat source apparatus 100, and then is heated again by refrigerant in the refrigerant-to-heat medium heat exchanger 12. The operational control unit 22 energizes the booster heater 109 when the capacity of the heat source apparatus 100 is insufficient for a load required by the radiator 106. When the booster heater 109 is energized, a heat medium flowing out of the heat source apparatus 100 is further heated. This increases the amount of heat released to air in the room by the radiator 106, so that the room is further heated.

In contrast, when a command to start hot-water supply operation is input, the operational control unit 22 drives the compressor 11, the first circulation pump 101, and the second circulation pump 102, and controls switching of the switching valve 103 such that the heat source apparatus 100 and the tank heat exchanger 108 are connected. At this time, a heat medium heated by the heat source apparatus 100 flows into the tank heat exchanger 108, while water in the tank 104 also flows into the tank heat exchanger 108. In the tank heat exchanger 108, water is heated by the heat medium, and then becomes hot. Thereafter, the hot water returns to the tank 104, and is stored in the tank 104. The cooled heat medium returns to the heat source apparatus 100, and then is heated again by refrigerant in the refrigerant-to-heat medium heat exchanger 12. The operational control unit 22 energizes the booster heater 109 when the capacity of the heat source apparatus 100 is insufficient for a load required by the tank heat exchanger 108. When the booster heater 109 is energized, a heat medium flowing out of the heat source apparatus 100 is further heated. This increases the amount of heat that heats water in the tank heat exchanger 108, so that the water becomes heated to an even higher temperature. When the temperature T3 detected by the third temperature sensor 203 is equal to or lower than a preset re-boiling temperature, the operational control unit 22 controls the water immersion heater 105 to be energized.

When neither air-conditioning operation nor hot-water supply operation is performed, the compressor 11, the first circulation pump 101, and the second circulation pump 102 stop, and thus power feed to the booster heater 109 is stopped.

The data collection unit 23 collects state data indicating an operating state of the heat-medium circuit. The data collection unit 23 receives inputs of measurement data, such as the heat-medium flow rate L measured by the flow sensor 110, the supply temperature T1 measured by the first temperature sensor 201, the return temperature T2 measured by the second temperature sensor 202, and the water temperature T3 measured by the third temperature sensor 203. The data collection unit 23 outputs the measurement data to the operational control unit 22 and the capacity calculation unit 27. The data collection unit 23 also receives inputs of control data and output data of each actuator from the operational control unit 22. The data collection unit 23 collects the measurement data, the control data, and the output data at set time intervals (for example, five minutes), and outputs the collected data as state data to the abnormality determination unit 24.

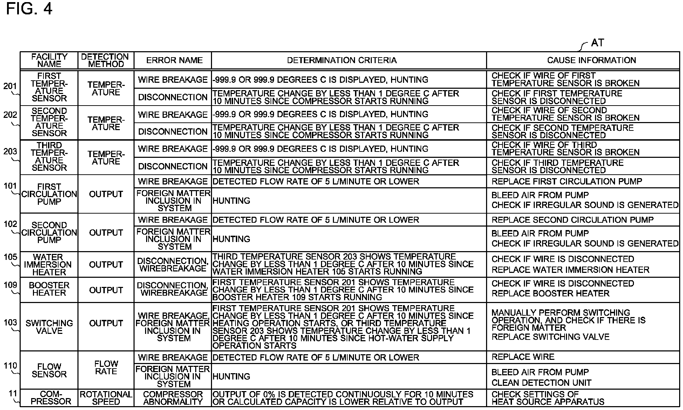

Fig. 4 illustrates a data structure of the remote control 200 according to the first embodiment of the present disclosure. As illustrated in Fig. 4, the storage unit 26 has an assist table AT stored therein. The assist table AT includes information regarding plural types of errors necessary for a worker to identify the source of an abnormality. The assist table AT includes information on the plural types of errors, a determination criterion associated with the information on each type of error, a facility name, a detection method, and cause information. The determination criterion shows conditions of state data when the abnormality determination unit 24 determines that an operational abnormality has occurred. The cause information includes a cause of occurrence of the error, error handling information, and other information. The storage unit 26 also has a threshold stored therein in advance. Each determination criterion is defined by the threshold.

The abnormality determination unit 24 determines whether an operational abnormality has occurred based on various types of state data input from the data collection unit 23 at preset time intervals. The abnormality determination unit 24 uses multiple determination criteria stored in the storage unit 26 to determine whether an abnormality has occurred. Specifically, the abnormality determination unit 24 determines the state data by comparing the state data to the threshold.

The threshold may be an instantaneous value or a value indicating the amount of change over time. When the threshold is the amount of change, the abnormality determination unit 24 calculates the amount of change in data value of the state data, and compares the calculated amount of change to the threshold. When the state data satisfies one or more determination criteria, the abnormality determination unit 24 determines that an operational abnormality has occurred, and extracts the data value that falls within the applicable range of the determination criterion as abnormal data. The abnormality determination unit 24 outputs the determination result along with the extracted data value to the data display unit 25. The abnormality determination unit 24 outputs the cause information associated with the determination criterion satisfied by the state data to the data display unit 25.

For example, 1 [degree C]/10 [minutes] is set as a threshold of the amount of change in the supply temperature $T1$. At the time of determination, the amount of change in the state data is compared to the threshold. Multiple determination criteria may be set for a single type of state data. For example, two types of errors, that is, wire breakage and disconnection of the first temperature sensor 201, are set for the supply temperature $T1$. A determination criterion is set for each type of error. A single determination criterion may be defined by a combination of plural types of state data. For example, whether a disconnection error has occurred in the first temperature sensor 201 is determined by a determination criterion that combines the supply temperature $T1$ with the control data of the compressor 11.

The capacity calculation unit 27 uses measurement data input from the data collection unit 23 to calculate the capacity. Specifically, the capacity calculation unit 27 calculates a heating capacity $F$ [kW] using the following Equation 1 based on the supply temperature $T1$ [degrees C], the return temperature $T2$ [degrees C], and the heat-medium flow rate $L$ [L/minute].

[Formula 1]

$$F = (T1 - T2) \times 4.2 \times L \div 60 \qquad \text{(Equation 1)}$$

The capacity calculation unit 27 outputs the calculated heating capacity $F$ to the data display unit 25. Note that the remote control 200 is not limited to include the capacity calculation unit 27, but may include a data analyzation unit configured to obtain various types of state data from the data collection unit 23 and calculate a physical quantity.

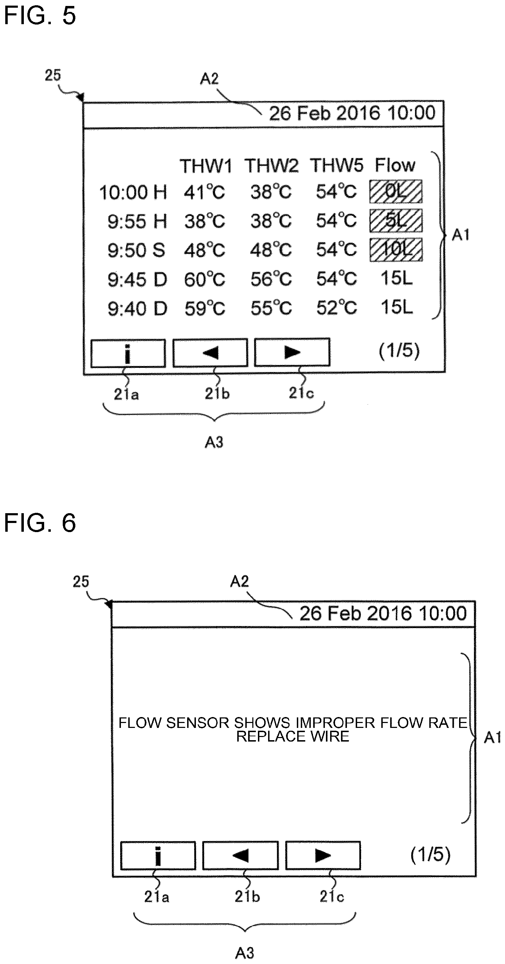

Fig. 5 is an explanatory diagram illustrating an example of state data displayed on the remote control of the air-conditioning hot-water supply system 300 according to the first embodiment of the present disclosure. Fig. 6 is an explanatory diagram illustrating an example of cause information displayed on the remote control of the air-conditioning hot-water supply system according to the first embodiment of the present disclosure.

The data display unit 25 displays information for checking of the operation. Specifically, the data display unit 25 displays each state data, a determination result, and other information input from the abnormality determination unit 24, and also displays the heating capacity $F$ input from the capacity calculation unit 27. On a screen of the data display unit 25, a data display area A1, a time display area A2, and a button area A3 are displayed. The data display area A1 is configured to display various types of information. The time display area A2 is provided above the data display area A1 to display the present time. The button area A3 is provided below the data display area A1 to function as the user-operation input unit 21.

The button area A3 includes a screen switching button 21a, a screen return button 21b, and a screen advance button 21c. In a case where various types of information cannot fit within a single screen, but are displayed over multiple pages, the screen return button 21b and the screen advance button 21c are used to return the screen being displayed to the previous page, or to advance the screen being displayed to the next page. As illustrated in Figs. 5 and 6, the screen switching button 21a is used to switch the display. The screen switching button 21a switches the screen between a data display screen and a cause display screen. The data display screen is configured to display various types of state data and a determination result. The cause display screen is configured to display cause information according to the type of error.

In the data display area A1 on the data display screen, time-series data values for each type of state data are displayed. Fig. 5 illustrates an example in which time-series data values of the supply temperature $T1$, the return temperature $T2$, the water temperature $T3$, and the heat-medium flow rate $L$ at intervals of five minutes are displayed. A determination result is also displayed on the data display screen. Specifically, abnormal data is displayed in a different manner from a normal data value such that the abnormal data is visually differentiated. For example, some of the data values of the heat-medium flow rate $L$ displayed in time series, which satisfy the determination criterion that the flow rate is equal to or lower than 5 [L/minute], (for example, 0 and 5) are highlighted as abnormal data.

An area may further be provided to notify the occurrence of an abnormality when there are three consecutive data values among those displayed in time series, which show a 10% or greater difference from the immediately-previous data value. Data values within a range where an abnormality has occurred (for example, 0, 5, and 10) may be highlighted.

For example, the data value may be highlighted by using an increased text font size, by hatching the text, or

**EP 3 754 266 A1**

by inverting the text color to the background color and vice versa. Furthermore, a plurality of thresholds may be provided, and a data value with a greater amount of change over time is displayed with a larger font size, or by darker hatching, or in a more intense color. With this highlighted display, a worker can easily check the data values from the point in time when there is a slight abnormality to the point in time when the abnormality becomes more severe, and thus can analyze the circumstances of the abnormality occurrence based on the displayed determination result.

Although not illustrated, in the data display area A1, the heating capacity F calculated by the capacity calculation unit 27 is also displayed in time sequence. For example, during the test run at the time of the installation, a worker can check each state data while referring to the heating capacity F being output.

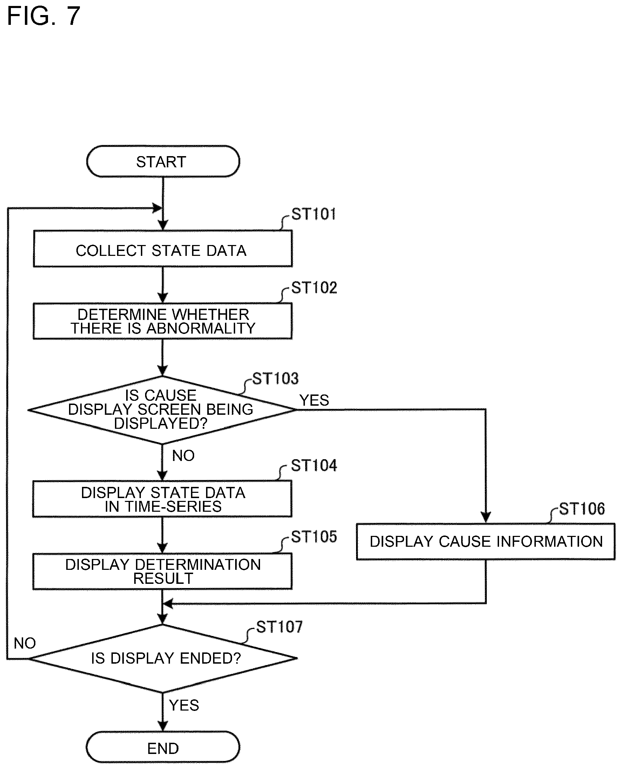

Fig. 7 is a flowchart illustrating an example of control to be executed by the remote control according to the first embodiment of the present disclosure. When the air-conditioning hot-water supply system 300 is installed in a building, its test run is conducted, and a worker checks the operation. A flow of the control to be executed by the remote control 200 at this time is described with reference to Figs. 2 to 7. The data collection unit 23 collects state data such as control data, output data, and measurement data at set time intervals (step ST101). The data collection unit 23 outputs each collected state data to the abnormality determination unit 24.

Based on each determination criterion, the abnormality determination unit 24 compares state data input from the data collection unit 23 at set time intervals to a threshold stored in the storage unit 26, and determines whether there is an operational abnormality (step ST102). For example, when the amount of change in the supply temperature T1 measured by the first temperature sensor 201 is below 1 degree C after 10 minutes since the compressor 11 starts running, the abnormality determination unit 24 determines that the first temperature sensor 201 is brought into a disconnected state and an abnormality has occurred. At this time, abnormal data that satisfies the determination criterion is extracted from a plurality of data values. The abnormality determination unit 24 outputs information including each state data, the determination result, and the abnormal data to the data display unit 25.

The data display unit 25 determines whether the cause display screen is being displayed (step ST103). When the cause display screen is not being displayed (NO in step ST103), the data display screen is being displayed. The data display unit 25 displays various types of state data in time series in the data display area A1 (step ST104) and displays the determination result (step ST105). For example, some of the time-series data values of the supply temperature T1, which fall within a range where the amount of change in temperature is below a threshold, are highlighted.

In contrast, when the cause display screen is being displayed (YES in step ST103), the data display unit 25 displays the cause information, associated with the determination criterion determined to be satisfied by the abnormality determination unit 24, on the cause display screen (step ST106). For example, when an error has occurred where the first temperature sensor 201 is disconnected from the pipe, a message is displayed to encourage a worker to check whether the first temperature sensor 201 is disconnected from the pipe.

After step ST105 or step ST106, the data display unit 25 determines whether a command to end the display is input from the user-operation input unit 21 (step ST107). When the command to end the display is input (YES in step ST107), the control illustrated in Fig. 6 is ended. In contrast, when the command to end the display is not input (NO in step ST107), steps ST101 to ST107 are repeated and the display screen is updated until the command to end the display is input.

As described above, the remote control 200 according to the first embodiment includes the data collection unit 23 configured to collect state data indicating the operating state of the heat-medium circuit, and the data display unit 25 configured to display data values of the state data in time sequence. With this configuration, a change in state data over time is displayed, so that a worker can easily identify the source of the cause where a state-data abnormality has occurred. For example, in a case where the wire of the first temperature sensor 201 is disconnected, a worker can refer to data values of the supply temperature T1 at the time when the compressor 11 starts running and after 10 minutes since the start of the compressor 11, and thus can determine the source of the cause based on the amount of change in the supply temperature T1 over time. Further, since the state data is displayed on the remote control 200, it is unnecessary to prepare an additional device used for checking of the operation, such as a personal computer.

The remote control 200 further includes the abnormality determination unit 24 configured to determine whether an operational abnormality has occurred based on the state data. The data display unit 25 displays abnormal data in a different manner from a normal data value. With this display, a worker can visually distinguish the abnormal data from the normal data value, and thus can quickly find the abnormal data from a plurality of data values.

Further, the abnormality determination unit 24 calculates the amount of change in state data per set time for various types of state data collected by the data collection unit 23, and determines the calculated amount of change by comparing the calculated amount of change to a threshold. With this configuration, whether there is an abnormality is determined based on the amount of change in the state data. Thus, in contrast to the conventional case where the data value is compared to a set value, a determination result with less fluctuations is obtained. Therefore, the reliability of identification of the cause is increased.

The data display unit 25 highlights a time-series data value that falls within a range determined as an operational abnormality by the abnormality determination unit 24. With this configuration, abnormal data is displayed in a more visually differentiated manner as compared to a normal data value. Thus, a worker can easily find abnormal data on the data display screen on which a plurality of data values are displayed. This facilitates checking of the operation by the worker.

The remote control 200 further includes the storage unit 26 configured to store therein a preset determination criterion and the cause information indicating the source of the cause, the determination criterion being associated with the cause information. The abnormality determination unit 24 determines that an operational abnormality has occurred when the state data satisfies the determination criterion. The data display unit 25 displays the cause information according to the determination criterion satisfied by the state data. With this configuration, in addition to the abnormal data and the determination result, the cause information is displayed on the remote control 200, so that a worker can deal with the error based on these pieces of information. Particularly, by using the remote control 200, a worker having limited installation experience can understand the relationship between the abnormal data and the cause. This can improve the installation efficiency.

The air-conditioning hot-water supply system 300 according to the first embodiment includes the remote control 200, the air-conditioning circuit 1, and the hot-water supply circuit 2. The data collection unit 23 in the remote control 200 collects state data from the air-conditioning circuit 1 and the hot-water supply circuit 2. With this configuration, even when the heat-medium circuit is made up of a plurality of circuits, the air-conditioning hot-water supply system 300 can still collect plural types of state data and display the state data in time series. A worker can thus easily check the operation, and efficiently install the air-conditioning hot-water supply system 300.

The air-conditioning hot-water supply system 300 further includes the first temperature sensor 201, the second temperature sensor 202, the flow sensor 110, and the third temperature sensor 203. The data collection unit 23 collects the state data on the supply temperature $T1$, the return temperature $T2$, the heat-medium flow rate $L$, and the water temperature $T3$. With this configuration, time-series data values of the supply temperature $T1$, the return temperature $T2$, the water temperature $T3$, and the heat-medium flow rate $L$ are displayed. A worker can thus analyze the operating state of the flow sensor 110 and the connection state and other states of each sensor, and can easily check the operation.

The embodiment of the present disclosure is not limited to the embodiment described above, but various changes may be made. For example, Fig. 4 illustrates the case where information on the supply temperature $T1$, the return temperature $T2$, the water temperature $T3$, and the heat-medium flow rate $L$ is displayed on the data display screen. However, any state data may be displayed on the data display screen. The data display unit 25 may give a higher priority to display some of the various types of input state data, which particularly include abnormal data. The data display unit 25 may be configured to display state data selected by a worker through the user-operation input unit 21.

Reference Signs List

1 air-conditioning circuit 2 hot-water supply circuit 11 compressor 12 refrigerant-to-heat medium heat exchanger 13 decompression device 14 refrigerant-to-air heat exchanger 21 user-operation input unit 21a screen switching button 21b screen return button 21c screen advance button 22 operational control unit 23 data collection unit 24 abnormality determination unit 25 data display unit 26 storage unit 27 capacity calculation unit 100 heat source apparatus 101 first circulation pump 102 second circulation pump 103 switching valve 104 tank 105 water immersion heater 106 radiator 108 tank heat exchanger 109 booster heater 110 flow sensor 200 remote control 201 first temperature sensor 202 second temperature sensor 203 third temperature sensor 300 air-conditioning hot-water supply system A1 data display area A2 time display area A3 button area AT assist table F heating capacity L heat-medium flow rate T1 supply temperature T2 return temperature T3 water temperature.

**Claims**

1. A remote control to control a heat-medium circuit, the remote control comprising:

   a data collection unit configured to collect state data indicating an operating state of the heat-medium circuit; and
   a data display unit configured to display a data value of state data collected by the data collection unit in time sequence.

2. The remote control of claim 1, further comprising an abnormality determination unit configured to determine whether an operational abnormality has occurred based on state data collected by the data collection unit, wherein
   the data display unit displays a data value, determined by the abnormality determination unit that an operational abnormality has occurred, in a different manner from a normal data value.

3. The remote control of claim 2, wherein the abnormality determination unit calculates an amount of change in state data per set time for state data collected by the data collection unit, and determines whether the operational abnormality has occurred by comparing the calculated amount of change to a threshold.

4. The remote control of claim 2 or 3, wherein the data display unit highlights a time-series data value that falls within a range determined as an operational abnormality by the abnormality determination unit.

5. The remote control of claim 4, wherein the data display unit highlights a data value by hatching, and displays a data value with a greater amount of change per set time by darker hatching.

6. The remote control of any one of claims 2 to 5, further comprising a storage unit configured to store therein a preset determination criterion and cause information indicating a source of a cause, the determination criterion being associated with the cause information, wherein
the abnormality determination unit determines that an operational abnormality has occurred when state data collected by the data collection unit satisfies the determination criterion, and
the data display unit displays the cause information according to the determination criterion satisfied by the state data.

7. An air-conditioning hot-water supply system comprising:

an air-conditioning circuit configured to perform air conditioning in a target space by using heat of a heat medium supplied from a heat source apparatus;
a hot-water supply circuit configured to heat water by using heat of a heat medium supplied from the heat source apparatus; and
the remote control of any one of claims 1 to 6, wherein
the data collection unit collects a plurality of types of state data from the air-conditioning circuit and the hot-water supply circuit.

8. The air-conditioning hot-water supply system of claim 7, further comprising:

a first temperature sensor configured to detect a supply temperature of a heat medium flowing out of the heat source apparatus;
a second temperature sensor configured to detect a return temperature of a heat medium flowing into the heat source apparatus;
a flow sensor configured to detect a flow rate of a heat medium circulating through the heat-medium circuit; and
a third temperature sensor configured to detect a temperature of the water, wherein
the data collection unit collects the state data on the supply temperature, the return temperature, the flow rate of the heat medium, and the temperature of the water.

FIG. 1

FIG. 2

FIG. 3

REMOTE CONTROL — 200

STORAGE UNIT — 26

OPERATIONAL CONTROL UNIT — 22

COMPRESSOR — 11

SWITCHING VALVE — 103

BOOSTER HEATER — 109

WATER IMMERSION HEATER — 105

FIRST CIRCULATION PUMP — 101

SECOND CIRCULATION PUMP — 102

FLOW SENSOR — 110

FIRST TEMPERATURE SENSOR — 201

SECOND TEMPERATURE SENSOR — 202

THIRD TEMPERATURE SENSOR — 203

DATA COLLECTION UNIT — 23

ABNORMALITY DETERMINATION UNIT — 24

CAPACITY CALCULATION UNIT — 27

DATA DISPLAY UNIT — 25

USER-OPERATION INPUT UNIT — 21

FIG. 4

AT

| FACILITY NAME | DETECTION METHOD | ERROR NAME | DETERMINATION CRITERIA | CAUSE INFORMATION |
|---|---|---|---|---|
| 201 FIRST TEMPER-ATURE SENSOR | TEMPER-ATURE | WIRE BREAKAGE | -999.9 OR 999.9 DEGREES C IS DISPLAYED, HUNTING | CHECK IF WIRE OF FIRST TEMPERATURE SENSOR IS BROKEN |
| | | DISCONNECTION | TEMPERATURE CHANGE BY LESS THAN 1 DEGREE C AFTER 10 MINUTES SINCE COMPRESSOR STARTS RUNNING | CHECK IF FIRST TEMPERATURE SENSOR IS DISCONNECTED |
| 202 SECOND TEMPER-ATURE SENSOR | TEMPER-ATURE | WIRE BREAKAGE | -999.9 OR 999.9 DEGREES C IS DISPLAYED, HUNTING | CHECK IF WIRE OF SECOND TEMPERATURE SENSOR IS BROKEN |
| | | DISCONNECTION | TEMPERATURE CHANGE BY LESS THAN 1 DEGREE C AFTER 10 MINUTES SINCE COMPRESSOR STARTS RUNNING | CHECK IF SECOND TEMPERATURE SENSOR IS DISCONNECTED |
| 203 THIRD TEMPER-ATURE SENSOR | TEMPER-ATURE | WIRE BREAKAGE | -999.9 OR 999.9 DEGREES C IS DISPLAYED, HUNTING | CHECK IF WIRE OF THIRD TEMPERATURE SENSOR IS BROKEN |
| | | DISCONNECTION | TEMPERATURE CHANGE BY LESS THAN 1 DEGREE C AFTER 10 MINUTES SINCE COMPRESSOR STARTS RUNNING | CHECK IF THIRD TEMPERATURE SENSOR IS DISCONNECTED |
| 101 FIRST CIRCULATION PUMP | OUTPUT | WIRE BREAKAGE | DETECTED FLOW RATE OF 5 L/MINUTE OR LOWER | REPLACE FIRST CIRCULATION PUMP |
| | | FOREIGN MATTER INCLUSION IN SYSTEM | HUNTING | BLEED AIR FROM PUMP CHECK IF IRREGULAR SOUND IS GENERATED |
| 102 SECOND CIRCULATION PUMP | OUTPUT | WIRE BREAKAGE | DETECTED FLOW RATE OF 5 L/MINUTE OR LOWER | REPLACE SECOND CIRCULATION PUMP |
| | | FOREIGN MATTER INCLUSION IN SYSTEM | HUNTING | BLEED AIR FROM PUMP CHECK IF IRREGULAR SOUND IS GENERATED |
| 105 WATER IMMERSION HEATER | OUTPUT | DISCONNECTION, WIREBREAKAGE | THIRD TEMPERATURE SENSOR 203 SHOWS TEMPERATURE CHANGE BY LESS THAN 1 DEGREE C AFTER 10 MINUTES SINCE WATER IMMERSION HEATER 105 STARTS RUNNING | CHECK IF WIRE IS DISCONNECTED REPLACE WATER IMMERSION HEATER |
| 109 BOOSTER HEATER | OUTPUT | DISCONNECTION, WIREBREAKAGE | FIRST TEMPERATURE SENSOR 201 SHOWS TEMPERATURE CHANGE BY LESS THAN 1 DEGREE C AFTER 10 MINUTES SINCE BOOSTER HEATER 109 STARTS RUNNING | CHECK IF WIRE IS DISCONNECTED REPLACE BOOSTER HEATER |
| 103 SWITCHING VALVE | OUTPUT | WIRE BREAKAGE, FOREIGN MATTER INCLUSION IN SYSTEM | FIRST TEMPERATURE SENSOR 201 SHOWS TEMPERATURE CHANGE BY LESS THAN 1 DEGREE C AFTER 10 MINUTES SINCE HEATING OPERATION STARTS, OR THIRD TEMPERATURE SENSOR 203 SHOWS TEMPERATURE CHANGE BY LESS THAN 1 DEGREE C AFTER 10 MINUTES SINCE HOT-WATER SUPPLY OPERATION STARTS | MANUALLY PERFORM SWITCHING OPERATION, AND CHECK IF THERE IS FOREIGN MATTER REPLACE SWITCHING VALVE |
| 110 FLOW SENSOR | FLOW RATE | WIRE BREAKAGE | DETECTED FLOW RATE OF 5 L/MINUTE OR LOWER | REPLACE WIRE |
| | | FOREIGN MATTER INCLUSION IN SYSTEM | HUNTING | BLEED AIR FROM PUMP CLEAN DETECTION UNIT |
| 11 COM-PRESSOR | ROTATIONAL SPEED | COMPRESSOR ABNORMALITY | OUTPUT OF 0% IS DETECTED CONTINUOUSLY FOR 10 MINUTES OR CALCULATED CAPACITY IS LOWER RELATIVE TO OUTPUT | CHECK SETTINGS OF HEAT SOURCE APPARATUS |

## FIG. 5

| | THW1 | THW2 | THW5 | Flow |
|---|---|---|---|---|
| 10:00 H | 41°C | 38°C | 54°C | 0L |
| 9:55 H | 38°C | 38°C | 54°C | 5L |
| 9:50 S | 48°C | 48°C | 54°C | 10L |
| 9:45 D | 60°C | 56°C | 54°C | 15L |
| 9:40 D | 59°C | 55°C | 52°C | 15L |

26 Feb 2016 10:00

A2

25

A1

i  ◄  ►  (1/5)

21a  21b  21c

A3

## FIG. 6

25  A2

26 Feb 2016 10:00

FLOW SENSOR SHOWS IMPROPER FLOW RATE
REPLACE WIRE

A1

i  ◄  ►  (1/5)

21a  21b  21c

A3

## FIG. 7

START

↓

COLLECT STATE DATA — ST101

↓

DETERMINE WHETHER THERE IS ABNORMALITY — ST102

↓

IS CAUSE DISPLAY SCREEN BEING DISPLAYED? — ST103 — YES →

NO ↓

DISPLAY STATE DATA IN TIME-SERIES — ST104

↓

DISPLAY DETERMINATION RESULT — ST105

DISPLAY CAUSE INFORMATION — ST106

↓

IS DISPLAY ENDED? — ST107 — NO

YES ↓

END

14

## INTERNATIONAL SEARCH REPORT

International application No.

PCT/JP2018/004830

### A. CLASSIFICATION OF SUBJECT MATTER
Int. Cl. F24H1/18(2006.01)i

According to International Patent Classification (IPC) or to both national classification and IPC

### B. FIELDS SEARCHED
Minimum documentation searched (classification system followed by classification symbols)
Int. Cl. F24H1/18, F24H4/00-4/06, F24F11/02, F25B29/00, G01D7/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2016-075428 A (AZBIL CORP.) 12 May 2016,<br>paragraphs [0018]-[0047], [0067]-[0070], fig. 1-9<br>(Family: none) | 1<br>2-4, 7-8<br>5-6 |
| Y<br>A | Microfilm of the specification and drawings annexed to the request of Japanese Utility Model Application No. 046457/1984 (Laid-open No. 158114/1985) (SHIMADZU CORP.) 21 October 1985, description, page 3, line 20 to page 7, line 15, fig. 1, 2 (Family: none) | 2-4, 7-8<br>5-6 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16.04.2018 | Date of mailing of the international search report<br>01.05.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/004830

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2012/101804 A1 (MITSUBISHI ELECTRIC CORP.) 02 August 2012, paragraphs [0009]-[0023], fig. 1, 2 & US 2013/0306301 A1, paragraphs [0042]-[0072], fig. 1, 2 & EP 2669605 A1 & EP 2781857 A1 & CN 103328910 A | 7-8 |
| A | JP 2017-053555 A (TOSHIBA CORP.) 16 March 2017, paragraphs [0008]-[0052], fig. 1-3, 5 (Family: none) | 1-8 |
| A | JP 2007-293489 A (MITSUBISHI ELECTRIC CORP.) 08 November 2007, paragraphs [0012]-[0029], fig. 1-7 (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3876697 B